Europäisches Patentamt

(19) European Patent Office

Office européen des brevets

(11) Numéro de publication: **0 082 909**
A1

(12) DEMANDE DE BREVET EUROPEEN

(21) Numéro de dépôt: 81810522.3

(22) Date de dépôt: 29.12.81

(51) Int. Cl.³: **A 01 K 1/06**
A 44 B 13/02, F 16 B 45/04

(43) Date de publication de la demande:
06.07.83 Bulletin 83/27

(84) Etats contractants désignés:
AT BE CH DE FR GB IT LI LU NL SE

(71) Demandeur: Etablissement Mento S.A.
Chemin de la Plage 2
CH-2520 La Neuveville(CH)

(72) Inventeur: Struchen, Eric
48, Route Du Chateau
CH-2520 La Neuveville(CH)

(74) Mandataire: Tordion, Serge
Cabinet de Conseil en brevets 23, rue du Marché-Neuf
Case postale 182
CH-2500 Bienne 3(CH)

(54) Mousqueton.

(57) Le mousqueton comprend un corps (1), que forme un crochet (2), et une branche (15) qui pivote autour d'un goujon (14). La branche (15) contient un tigeron (18) coulissant dans un alésage (17), entre des positions délimitées par une goupille (20) plongeant dans une fente (21). Un ressort (19) pousse vers l'extérieur le tigeron (18), qui constitue un verrou et tient le mousqueton fermé, en s'engageant sous un épaulement (24) de l'extrémité (25) du crochet (2). Un poussoir (7) permet de dégager ce verrou de l'épaulement (24) sans avoir la main dans le chemin de la branche (15), qui bascule violemment, lorsque le mousqueton est sous tension au moment de son ouverture.

Ce mousqueton sert principalement à attacher le licol du bétail. Il peut aussi être utilisé pour arrimer des barques de pêche ou des bateaux de tourisme.

Fig. 1

EP 0 082 909 A1

- 1 -

## M O U S Q U E T O N

Le verrou escamotable des mousquetons connus, conformes au préambule de la revendication 1, est monté sur la branche basculante du mousqueton. Pour ouvrir le mousqueton, il faut donc éloigner ce verrou du crochet du mousqueton en le faisant coulisser le long de sa branche basculante.

Normalement, ce verrou pourrait être dégagé du crochet du mousqueton à l'aide d'un seul doigt. Toutefois, si la bête attachée s'excite et tire violemment sur le mousqueton, la friction du verrou contre la face correspondante du crochet du mousqueton est telle qu'il faut le saisir entre le pouce et l'index et le tirer fortement le long de la dite branche basculante pour le dégager. Or, une fois que cette dernière est libérée, la traction exercée par la bête a pour effet de faire basculer cette branche très violemment de 180° autour de son pivot. La personne qui détache la bête est donc exposée à recevoir l'extrémité de la branche basculante du mousqueton dans la main, ce qui peut provoquer une déchirure de la peau, suivie d'une infection.

L'invention vise à éliminer ce risque en créant un mousqueton qui puisse être ouvert sans devoir placer la main dans le chemin de sa branche basculante pour en actionner le verrou.

Le mousqueton défini par la revendication 1 atteint manifestement ce but, grâce aux particularités de la caractéristique de cette revendication. En effet, comme l'accès à l'organe commandant l'escamotage du verrou est situé d'un côté du crochet du mousqueton, qui est à l'opposé de sa branche basculante, la personne qui veut ouvrir le mousqueton peut atteindre cet organe sans devoir placer sa main dans le chemin de cette branche basculante. Elle ne risque même pas de la mettre à un tel endroit.

Les formes spéciales d'exécution définies par la revendication 2 ont l'avantage d'éviter une ouverture intempestive du mousqueton, même si la bête ainsi attachée se démène furieusement. Vu que le bouton commandant l'escamotage du verrou de fermeture du mousqueton se trouve dans un évidement, il est tenu à l'abri des contacts avec des corps étrangers.

Les particularités du mousqueton définies par la revendication 3 ont l'avantage de produire un verrouillage automatique de la branche basculante du mousqueton en position fermée, en amenant simplement cette branche dans cette position. Le ressort de poussée, qui agit sur le verrou pousse en effet ce dernier automatiquement en position de verrouillage, quand la branche basculante du mousqueton arrive en position de fermeture.

Les revendications 4 et 5 définissent un verrou dont le montage et le démontage sont particulièrement simples.

Le jeu des particularités définies par la revendication 6 a l'avantage de produire automatiquement une ouverture complète du mousqueton, toutes les fois que son poussoir est pressé à fond. Quant à la revendication 7, elle définit des particularités qui garantissent ce fonctionnement.

Une forme d'exécution du mousqueton selon l'invention est représentée schématiquement et à simple titre d'exemple au dessin, dans lequel:

La Fig. 1 en est une vue en élévation en position fermée, certaines parties étant coupées;

La Fig. 2 en est une vue en plan;

La Fig. 3 en est une vue en bout, depuis la droite de la Fig. 1, et

la Fig. 4 en est une vue semblable à celle de la Fig. 1, au moment précis où le bouton-poussoir vient d'avoir été pressé à fond.

Le mousqueton représenté comprend un corps 1 formant un crochet 2, dont l'extrémité adjacente au fond 3 du crochet présente deux oreilles percées 4, qui permettent de fixer ce mousqueton par exemple au dernier anneau d'une chaîne ou à une boucle, elle-même fixée à une courroie ou à une corde. Un alésage 5 percé à travers le fond 3 du crochet 2, tient lieu de guidage à la tige 6 d'un poussoir 7. A l'intérieur du crochet 2, cette dernière est venue de fabrication avec une tête plate 8, qui présente un méplat biseauté 9. L'autre extrémité de la tige 6 présente un trou taraudé, dans lequel est vissé un bouton 10, qui est situé tout entier dans un évidement 11 formé dans la partie externe du crochet 2. Les parois 12 de l'évidement 11 tiennent le bouton 10 à l'écart des contacts avec des pièces étrangères et évitent ainsi un actionnement involontaire du poussoir 7.

Deux oreilles percées 13 sont également formées à l'extrémité du corps 1, opposée au crochet 2. Un goujon 14, engagé dans les ouvertures des oreilles 13, tient lieu de pivot à la branche basculante 15 du mousqueton. Cette dernière comprend une partie cylindrique 16, qui présente un alésage axial 17, dans lequel un verrou, constitué par un tigeron cylindrique 18, peut coulisser librement. Celui-ci est toutefois placé sous l'action d'un ressort 19, qui tend à faire sortir le verrou 18 de l'alésage 17. Le verrou 18 est toutefois retenu en place par une goupille transversale 20, dont l'extrémité plonge dans une fente longitudinale 21 de la paroi 27 de la partie cylindrique 16 de la branche basculante 15 du mousqueton. Un trou radial 22, de diamètre au plus égal à celui de la goupille 20 est percé dans cette paroi, en un point diamétralement opposé à la fente 21, afin de permettre un déchassage de cette goupille, par exemple en vue de remplacer le ressort 19.

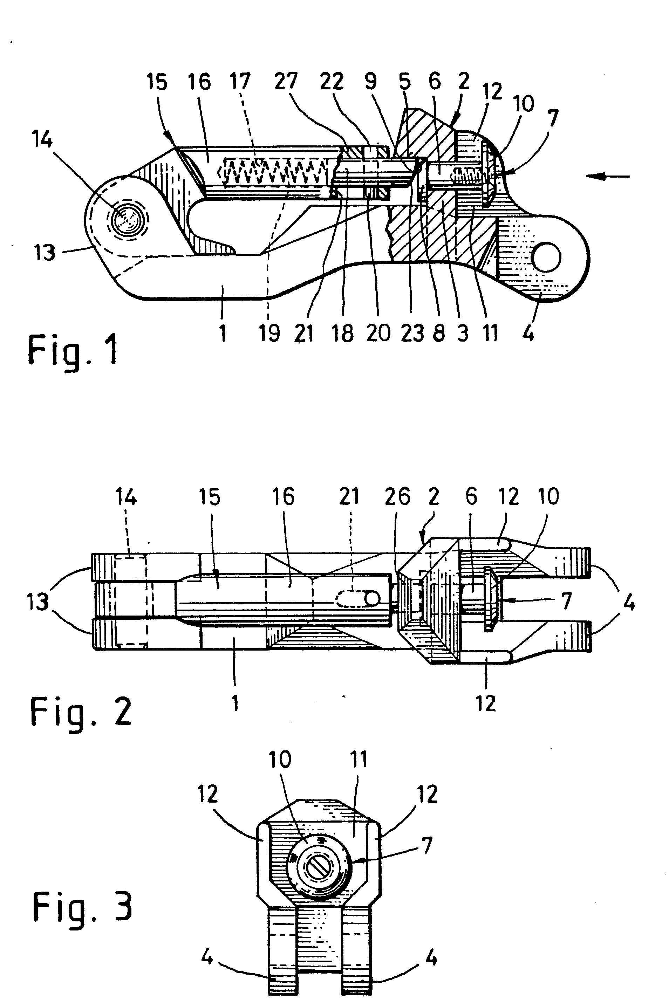

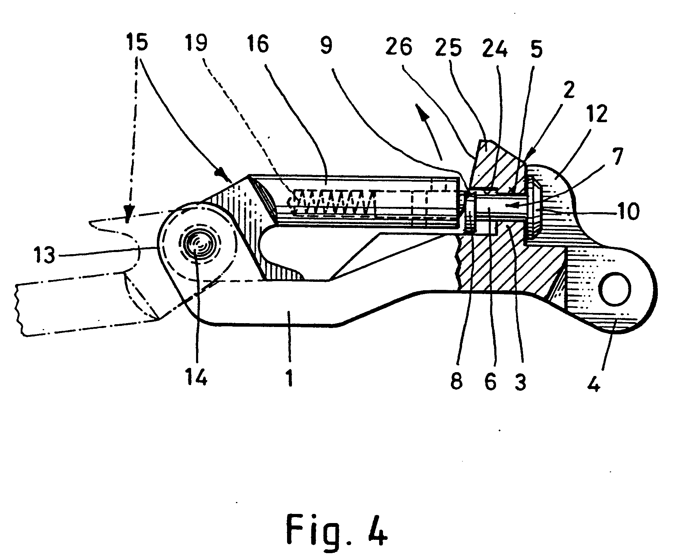

L'extrémité du verrou 18 est taillée selon une surface courbe 23 qui, partant du bord supérieur du verrou 18, dans la Fig. 1, va en s'éloignant du crochet 2. Dans la position de fermeture du mousqueton, représentée à la Fig. 1, le verrou 18 est engagé sous un épaulement 24 de l'extrémité 25 du crochet 2. En pressant le bouton 9 à fond dans la position de la Fig. 1, la tête 8 du poussoir 7 dégage le verrou 18 de l'épaulement 24, comme le montre la Fig. 4. A cet instant, la surface courbe 23 du verrou 18 glisse sur le biseau du méplat 9 de la tête 8, sous l'action de son ressort 19. Le verrou 18 arrive ainsi su le plan incliné 26, constituant la face extrême du crochet 2. Le ressort 19, en faisant glisser rapidement le verrou 18 le long de ce plan incliné 26, projette violemment la branche basculante 15 du mousqueton jusque dans la position représentée en traits mixtes dans la Fig. 4, en la faisant ainsi tourner environ de 180° autour de son pivot 14.

On remarquera que le bouton 10 peut être actionné sans engager la main dans le chemin de la branche basculante 15.

Le mousqueton selon l'invention sert principalement à attacher le licol du bétail par exemple au mur d'une étable. Il peut toutefois aussi être utilisé avantageusement pour l'amarrage des petits bateaux de pêche ou de tourisme.

# REVENDICATIONS :

1. Mousqueton, principalement, mais non exclusivement pour le licol du bétail, comprenant un corps en forme de crochet et une branche basculante, qui est tenue en position de fermeture, de façon à former une boucle fermée avec le dit crochet, par un verrou escamotable, caractérisé

en ce que l'escamotage du dit verrou (18) est commandé par un organe (7) accessible depuis un côté du corps (1) opposé à la dite branche (15) basculante.

2. Mousqueton selon la revendication 1, caractérisé

en ce que l'organe de commande du verrou (18) est constitué par un poussoir (7) dont une tige (6) traverse le fond (3) du crochet (2) du dit corps (1) et porte, à l'extérieur de ce dernier, un bouton de commande (10) logé dans un évidement (11) du dit corps (1).

3. Mousqueton selon la revendication 1 ou la revendication 2, caractérisé

en ce que le dit verrou escamotable (18) est monté coulissant dans une ouverture longitudinale (17) formée dans la dite branche basculante (15), depuis son extrémité, et est placé sous l'action d'un ressort de poussée (19), logé au fond de la dite ouverture (17).

4. Mousqueton selon la revendication 3, caractérisé

en ce que le dit verrou escamotable est constitué par un tigeron cylindrique (18), qui est retenu dans un alésage (17) de la branche basculante (15) par une goupille transversale (20), dont l'extrémité se déplace dans une fente longitudinale (21) de la branche basculante (15).

5. Mousqueton selon la revendication 4, caractérisé

en ce qu'un trou radial (22), de diamètre égal au plus à celui de la dite goupille (20), traverse la paroi (27) de la dite branche basculante (15) en un endroit de celle-ci, qui est diamétralement opposé à la dite fente longitudinale (21).

6.      Mousqueton selon la revendication 3 ou la revendication 4 ou la revendication 5,

caractérisé

- en ce qu'en position de fermeture de la dite branche basculante (15), la partie terminale du dit verrou (18) est engagée sous un épaulement (24) du dit corps (1),

- en ce que l'extrémité du dit verrou (18) est constituée par une surface courbe (23) qui, à partir du bord du verrou en contact avec le dit épaulement (24), va en s'éloignant du dit corps (1), jusqu'au bord opposé du verrou

- et en ce que ce corps présente un plan incliné (26) qui est adjacent au dit épaulement (24) et qui, lorsque le verrou (18) est dégagé du dit épaulement, coopère avec la dite surface courbe (23) du verrou (18) de façon à produire, sous l'action du ressort (19) du verrou (18), une projection de la dite branche basculante (15) qui la fait tourner approximativement de 180° autour de son pivot (14).

7.      Mousqueton selon la revendication 2 et la revendication 6, caractérisé

en ce que la face de la tige (6) du dit poussoir (7), qui est en contact avec le dit verrou (18), présente un biseau (9) qui, au moment où le verrou est dégagé du dit épaulement (24), coopère avec la dite surface courbe (23) du verrou pour la faire passer sur le dit plan incliné (26) du corps (1) du mousqueton.

## R E V E N D I C A T I O N S :

1. Mousqueton, principalement, mais non exclusivement, pour attacher le bétail, comprenant deux pièces articulées l'une sur l'autre qui, lorsqu'elles sont rapprochées l'une de l'autre, forment une boucle allongée, qui est maintenue fermée par un verrou coulissant dans l'une de ces deux pièces et placé sous l'action d'un ressort tendant à le maintenir en engagement avec l'autre pièce,
caractérisé

- en ce que l'une des dites pièces est constituée par un corps massif, allongé (1), dont une extrémité, en forme de crochet (2), est destinée à rester fixée à l'extrémité d'un brin de chaîne, de lanière ou de corde, et dont l'autre extrémité est agencée de façon à assurer une articulation (14) de la seconde pièce (15), lui permettant de basculer d'environ 180° à partir de sa position fermée, dans laquelle elle présente une branche rectiligne (16) s'étendant de la dite articulation (14) jusqu'au crochet (2), parallèlement au corps (1),

- en ce que le dit verrou (18) est monté à l'extrémité libre de la seconde pièce (15) et s'engage sous un épaulement (24) du dit crochet (2), en position de fermeture du mousqueton

- et en ce que, pour dégager le verrou (18) de cet épaulement (24), le mousqueton comprend un poussoir (7) présentant une tige (6), qui est coaxiale au verrou (18) et qui traverse le fond (3) du crochet (2).

2. Mousqueton selon la revendication 1,
caractérisé
- en ce que la dite tige (6) porte un bouton de commande (10), qui est fixé à son extrémité extérieure
- et en ce qu'elle est venue de fabrication à son extrémité intérieure avec une tête (8) en contact avec le dit verrou (18).

3. Mousqueton selon la revendication 2,
caractérisé
en ce que le dit bouton de commande (10) est enveloppé par les parois (12) d'un évidement (11) du corps (1).

4. Mousqueton selon la revendication 2 ou la revendication 3,
caractérisé

**0082909**

en ce que les extrémités (23) du verrou (18) et (26) du crochet (2) ont des inclinaisons assurant la projection, autour de l'articulation (14) de la branche (16) de la pièce (15) à environ 180° de sa position de fermeture, sous la seule action du ressort (19) du verrou (18).

5. Mousqueton selon la revendication 4, caractérisé

en ce que la tête (8) du poussoir (7) présente un biseau (9), qui coopère avec l'extrémité inclinée (23) du verrou (18) pour amener celle-ci sur la face inclinée (26) du crochet (2), lorsque le verrou (18) est dégagé de l'épaulement (24) de ce crochet (2) par le poussoir (7).

Fig. 1

Fig. 2

Fig. 3

Fig. 4

0082909

**Office européen des brevets**

**RAPPORT DE RECHERCHE EUROPEENNE**

Numéro de la demande

EP 81 81 0522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-C- 281 771 (MUHL)<br>* figures 1,2,5; page 1, lignes 24-50; page 2, lignes 16-22 * | 1 | A 01 K 1/06<br>A 44 B 13/02<br>F 16 B 45/04 |
| | --- | | |
| A | DE-C-1 001 537 (BECKER & HÖNERBACH)<br>* figures 2,3; colonne 2, lignes 39-54 * | 2 | |
| | --- | | |
| A | CH-A- 100 257 (FLÜCKIGER)<br>* en entier * | 2-4,6 | |
| | ----- | | |

**DOMAINES TECHNIQUES RECHERCHES (Int. Cl. ³)**

A 01 K

Le présent rapport de recherche a été établi pour toutes les revendications

| Lieu de la recherche | Date d'achèvement de la recherche | Examinateur |
|---|---|---|
| LA HAYE | 04-10-1982 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82